(19) **Europäisches Patentamt / European Patent Office / Office européen des brevets**

(11) **EP 2 613 948 B1**

(12) **FASCICULE DE BREVET EUROPEEN**

(45) Date de publication et mention de la délivrance du brevet:
**27.08.2014 Bulletin 2014/35**

(21) Numéro de dépôt: **11752252.4**

(22) Date de dépôt: **08.09.2011**

(51) Int Cl.:
**B60C 11/03** *(2006.01)*   **B60C 11/11** *(2006.01)*
**B60C 11/12** *(2006.01)*

(86) Numéro de dépôt international:
**PCT/EP2011/065563**

(87) Numéro de publication internationale:
**WO 2012/032123 (15.03.2012 Gazette 2012/11)**

(54) **BANDE DE ROULEMENT POUR PNEUMATIQUE**

REIFENPROFIL

TIRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2010 FR 1057202**

(43) Date de publication de la demande:
**17.07.2013 Bulletin 2013/29**

(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeurs:
- **FUGIER, Sébastien**
  **F-63040 Clermont-Ferrand Cedex 9 (FR)**
- **JAMOT, Nicolas**
  **F-63040 Clermont-Ferrand Cedex 9 (FR)**
- **FRAENKEL, Bertrand**
  **F-63040 Clermont-Ferrand Cedex 9 (FR)**

(74) Mandataire: **Demaure, Pierre-Yves**
  **Manufacture Française**
  **des Pneumatiques Michelin**
  **23, place des Carmes - Déchaux**
  **SGD/LG/PI - F35 - Ladoux**
  **63040 Clermont-Ferrand Cedex 9 (FR)**

(56) Documents cités:
**EP-A2- 1 795 372     JP-A- 2007 153 056**
**JP-A- 2009 067 344**

**Description**

DOMAINE DE L'INVENTION

La présente invention concerne une bande de roulement pour pneumatique ayant une sculpture asymétrique. L'invention est notamment relative aux bandes de roulement pour roulages hivernaux destinées à équiper des véhicules automobiles de tourisme.

ETAT DE LA TECHNIQUE

Afin de garantir une bonne adhérence sur un sol enneigé, il est connu de pourvoir les bandes de roulement avec des incisions, comme dans le document EP-A-1 795 372.
Il est également connu d'incliner ces incisons sur la surface de roulement par rapport à la direction transversale afin de garantir l'adhérence sur le sol enneigé, notamment dans les virages.
Cependant sur un sol sec, la présence d'incisions inclinées peut créer un problème de tirage latéral, perturbant alors la conduite du véhicule.
C'est donc un but de la présente invention de fournir une bande de roulement pour roulages hivernaux ayant une bonne adhérence sur un sol enneigé tout en limitant les problèmes de tirage latéral sur un sol sec.

DEFINITIONS

Par « pneumatique », on entend tous les types de bandages élastiques soumis au cours d'un roulage à une pression interne ou non.
Par « bande de roulement d'un pneumatique », on entend une quantité de composition caoutchouteuse délimitée par des surfaces latérales et par deux surfaces principales dont une est destinée à entrer en contact avec un sol lorsque le pneumatique roule.
Par « surface de roulement », on entend la surface formée par les points de la bande de roulement du pneumatique qui entrent en contact avec le sol lorsque le pneumatique roule.
Par « bande de roulement asymétrique », on entend une bande de roulement présentant une sculpture non symétrique par rapport à un plan médian du pneumatique.
Par « motif de base », on entend un groupement particulier d'éléments en relief. Les motifs de base de la bande de roulement dérivent d'un même motif élémentaire à un rapport d'échelle près.
Par « pas d'un motif de base », on entend la longueur dudit motif de base selon une direction circonférentielle X.
Par « rainure » (« groove » en anglais), on entend une découpure (« cut-out » en anglais) dont les faces de matière ne se touchent pas dans les conditions usuelles de roulage. Généralement, la largeur d'une rainure est supérieure ou égale à 1 mm.
Par « incision » (« sipe » en anglais), on entend une découpure dont les faces de matière se touchent dans les conditions usuelles de roulage. Généralement, la largeur d'une incision est inférieure à 1 mm et la profondeur de l'incision dans la bande de roulement est supérieure ou égale à 3 mm.
Par « tirage latéral » (« lateral pull » en anglais), on entend la tendance qu'un véhicule peut avoir à dévier d'une trajectoire rectiligne en dehors de toute action sur le volant par le conducteur. Le tirage latéral est notamment présent lorsque le conducteur transmet un couple freineur ou moteur au pneumatique.
Par « direction circonférentielle », on entend une direction tangente à un cercle dont le centre est sur l'axe de rotation du pneumatique.
Par « direction transversale », on entend une direction parallèle à l'axe de rotation dudit pneumatique.
Par « direction radiale », on entend toute direction perpendiculaire à l'axe de rotation du pneumatique.

RESUME DE L'INVENTION

L'invention concerne une bande de roulement asymétrique pour un pneumatique destiné à équiper un véhicule automobile. La bande de roulement comporte une surface de roulement destinée à être en contact avec un sol au cours du roulage du pneumatique. La bande de roulement comporte une séquence de motifs de base agencés selon la direction circonférentielle, chaque motif de base s'étendant sur au moins 80% de la largeur de la bande de roulement. Chaque motif de base comporte une pluralité d'éléments en relief pourvus d'incisions débouchant sur la surface de roulement, chaque incision ayant une largeur inférieure à 1 mm et une profondeur d'au moins 3 mm. Pour chaque motif de base, on définit une densité d'incisions correspondant à $\dfrac{\sum_i li}{P * Wm}$ avec i le nombre d'incisions dans le motif, li la longueur de la ième incision sur la surface de roulement, P le pas du motif de base et Wm la largeur du motif de base. On définit également un niveau d'orientation des incisions correspondant à $\dfrac{\sum_i |li * \alpha i|}{P * Wm}$ avec $\alpha$i l'angle positif ou négatif formé sur la surface de roulement par la ième incision avec la direction transversale et $|\alpha i| \leq 45$ degrés. Enfin, on définit un critère de tirage du motif de base correspondant à $\left| \dfrac{\sum_i li * \alpha i}{\sum_i |li * \alpha i|} \right|$. La bande de roulement objet de l'invention est remarquable en ce que la densité d'incision est supérieure ou égale à 60 $\mu$m/mm$^2$, le niveau d'orientation des incisions est supérieur ou égal à 1,5 degrés/mm$^2$ et le critère de tirage du motif est inférieur ou égal à 0,05. La bande de roulement comprend une demi-bande de roulement interne adjacente à un flanc interne du pneumatique et le niveau d'orientation des incisions appartenant à la demi-bande de roulement interne est supérieur à 2 degrés/mm.

Les incisions inclinées forment des arêtes inclinées sur la surface de roulement de la bande de roulement. Un sol sec induit des efforts longitudinaux importants sur la bande de roulement du pneumatique. Sous l'effet de ces efforts longitudinaux, une partie des arêtes inclinées formées par les incisions génère des efforts transversaux résiduels qui peuvent se transmettre au dispositif de direction du véhicule.

En choisissant l'orientation et la longueur des incisions de la bande de roulement selon les critères de l'invention, on s'assure que les effets de tirage latéral liés aux incisions se compensent, au moins en partie, au niveau de chaque motif de base du pneumatique. De cette manière, on limite le tirage latéral global du pneumatique au cours d'un roulage sur un sol sec tout en améliorant l'adhérence de ce pneumatique sur un sol enneigé.

En outre, en choisissant un niveau d'orientation des incisions appartenant à la demi-bande de roulement interne supérieur à 2 degrés/mm, on s'assure d'une bonne adhérence en virage sur un sol enneigé tout en limitant globalement un tirage latéral sur un sol sec.

Le critère de tirage est inférieur à 0,05.

On limite ainsi le tirage latéral global du véhicule au cours d'un roulage sur un sol sec.


BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

-    la figure 1 représente schématiquement une vue partielle d'une bande de roulement d'un pneumatique conforme à l'invention ;

-    la figure 2 illustre comment le bord axial d'une bande de roulement est déterminé selon une première méthode de détermination ;

-    la figure 3 illustre comment le bord axial d'une bande de roulement est déterminé selon une seconde méthode de détermination ;

-    la figure 4 représente plus particulièrement un motif de base de la bande de roulement de la figure 1.


Dans la description qui va suivre, des éléments identiques ou similaires seront désignés par des références identiques.

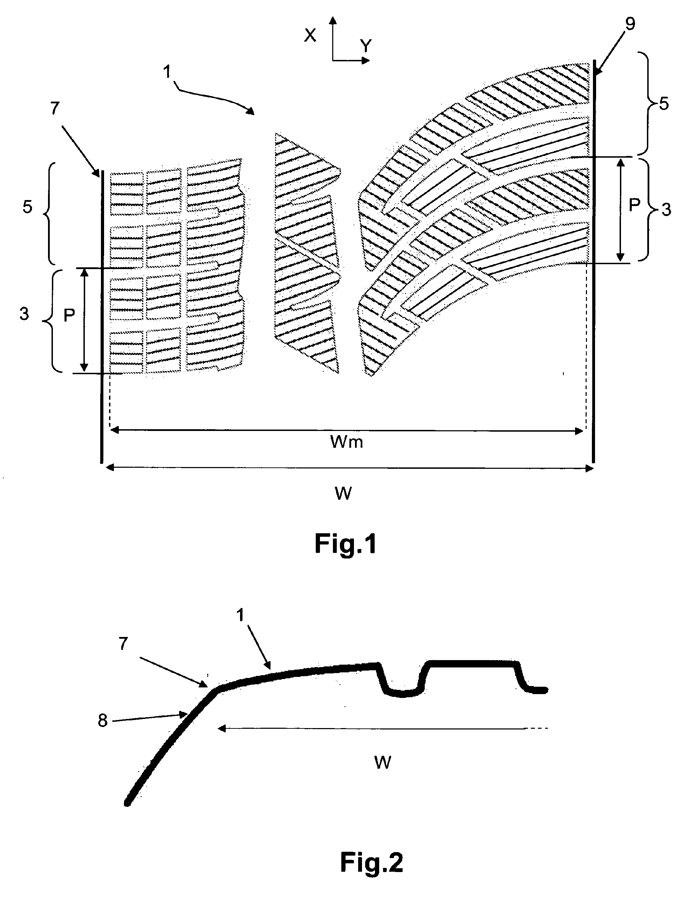

La figure 1 présente partiellement la surface de roulement d'une bande de roulement 1.

La bande de roulement 1 comprend une séquence de n motifs de base 3, 5 agencés selon la direction circonférentielle X, avec n un entier naturel supérieur ou égal à 1. Pour faciliter la compréhension de la figure 1, on a représenté seulement un premier motif de base 3 et un second motif de base 5.

Chaque motif de base 3, 5 s'étend selon la direction circonférentielle X selon un pas P déterminé.

Le pas du premier motif de base 3 est ici identique au pas du second motif de base 5. En variante, les pas des motifs de base sont différents.

Chaque motif de base 3, 5 s'étend sur au moins 80% de la largeur W de la bande de roulement. Dans l'exemple de la figure 1, la largeur Wm du motif de base 3, 5 est ici sensiblement identique à la largeur W de la bande de roulement.

La largeur W de la bande de roulement correspond à la distance entre un premier bord axial 7 et un second bord axial 9 de la bande de roulement.

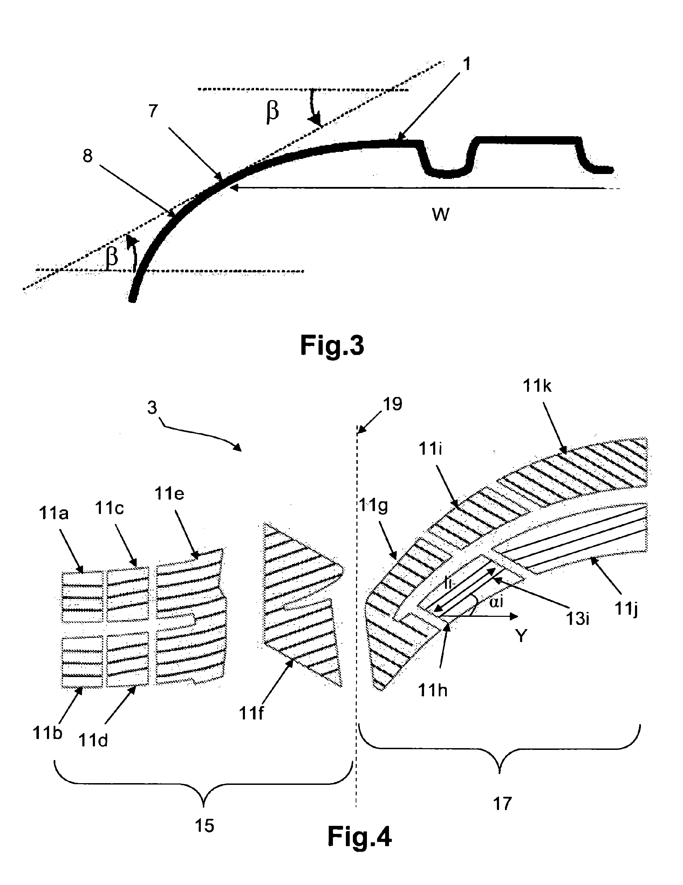

La manière dont on détermine la largeur W d'une bande de roulement est illustrée aux figures 2 et 3 qui montrent chacune le profil partiel d'une bande de roulement 1 et la partie d'un flanc 8 qui lui est adjacente. Dans certaines architectures de pneumatique, la transition de la bande de roulement vers les flancs est très nette, comme dans le cas représenté à la figure 2, et la détermination du premier bord axial 7 et du second bord axial (non représenté) est intuitive.

Il existe cependant des architectures de pneumatique où la transition entre la bande de roulement et les flancs est continue. Un exemple est représenté à la figure 3.

Sur cette figure 3, on détermine le premier bord axial 7 et le second bord axial de la bande de roulement comme suit. On trace, dans une coupe radiale du pneumatique, la tangente à la surface de roulement en tout point de ladite surface de roulement dans la zone de transition vers le flanc. Le premier bord axial 7 est le point dans lequel l'angle β (béta) entre ladite tangente et une direction axiale est égal à 30°. Lorsqu'il existe plusieurs points pour lesquels l'angle β entre ladite tangente et une direction axiale est égal à 30°, on retient le point radialement le plus à l'extérieur. On procédera de la même manière pour déterminer le second bord axial de la bande de roulement.

La figure 4 présente plus particulièrement le premier motif de base 3 de la figure 1.

Le premier motif de base 3 comprend ici 11 éléments en relief, dénommés respectivement premier élément en relief 11a, second élément en relief 11b, troisième élément en relief 11c, quatrième élément en relief 11d, cinquième élément en relief 11e, sixième élément en relief 11f, septième élément en relief 11g, huitième élément en relief 11h, neuvième élément en relief 11i, dixième élément en relief 11j, onzième élément en relief 11k.

Le premier motif de base 3 est pourvu de i incisions 13i débouchant sur la surface de roulement, avec i un entier naturel supérieur à 1.

Les i incisions sont réparties sur les différents éléments en relief 11a-11k.

Pour chaque incision 13i, il est possible de déterminer une longueur d'incision 1i correspondant à la longueur de la trace de ladite incision sur la surface de roulement.

On détermine également pour chaque incision 13i un angle αi (alpha i), avec |αi|≤45 degrés. L'angle αi correspond à l'angle formé par la ième incision 13i avec la direction transversale Y.

On explique dans la suite de la description la manière dont sont définis les angles des incisions.

L'angle d'incision est dit positif par rapport à la direction transversale Y si la rotation qui amène ladite direction transversale Y à la trace de l'incision sur la surface de roulement se fait dans le sens trigonométrique direct.

A contrario, l'angle d'incision est dit négatif par rapport à la direction transversale Y si la rotation qui amène ladite direction transversale Y à la trace de l'incision sur la surface de roulement se fait dans le sens trigonométrique inverse, c'est-à-dire dans le sens horaire.

Ainsi, le premier élément 11a et le second élément 11b ont des incisions formant un angle globalement nul avec la direction transversale Y.

De la même manière, le troisième élément 11c, le quatrième élément 11d, le cinquième élément 11e, le sixième élément 11f, le huitième élément 11h et le dixième élément 11j ont des incisions formant un angle positif avec la direction transversale Y.

Enfin, le septième élément 11g, le neuvième élément 11i et le onzième élément 11k ont des incisions formant un angle négatif avec la direction transversale Y.

On définit également pour le motif de base 3 une densité d'incisions D, un niveau d'orientation des incisions NO et un critère de tirage CT.

La densité d'incisions D correspond à l'équation $\dfrac{\sum\limits_{i} li}{P * Wm}$. Pour rappel, i est le nombre d'incisions dans le motif de base, 1i est la longueur de la ième incision sur la surface de roulement, P est le pas du motif de base et Wm est la largeur du motif de base.

Le niveau d'orientation NO des incisions correspond à l'équation $\dfrac{\sum\limits_{i} |li * \alpha i|}{P * Wm}$. Pour rappel, αi est l'angle positif ou négatif formé sur la surface de roulement par la ième incision avec la direction transversale Y et on a |αi|≤45 degrés.

Le critère de tirage CT du motif de base correspond à l'équation $\left| \dfrac{\sum\limits_{i} li * \alpha i}{\sum\limits_{i} |li * \alpha i|} \right|$.

Le nombre d'incisions 13i dans le motif des base 3, la longueur des incisions et l'angle des incisions sont déterminés de sorte que la densité d'incision est supérieure à 60 $\mu$m/mm$^2$, le niveau d'orientation des incisions est supérieur à 1,5 degrés/mm et le critère de tirage du motif est inférieur à 0,05.

De cette manière, on garantit un faible tirage latéral du pneumatique au cours d'un roulage sur un sol sec tout en conservant une bonne adhérence de ce pneumatique sur un sol enneigé.

A titre d'exemple, on a répertorié dans le tableau ci-dessous les caractéristiques des incisions présentes dans les différents éléments en relief de la figure 4. Dans ce tableau, la première ligne référence les différents éléments en relief du motif de base 3, la seconde ligne détaille les angles des incisions associées aux différents éléments en relief et la troisième ligne détaille la longueur totale des incisions présentes dans les différents éléments en relief.

| Eléments en relief | 11a | 11b | 11c | 11d | 11e | 11f | 11g | 11h | 11i | 11j | 11k |
|---|---|---|---|---|---|---|---|---|---|---|---|
| Angle des incisions en degrés | 0 | 0 | 4,5 | 4,5 | 12 | 20 | -30 | 35 | -30 | 18 | -30 |
| Longueur totale des incisions (mm) | 50 | 50 | 50 | 50 | 250 | 245 | 170 | 70 | 90 | 160 | 220 |

En prenant un pas de motif de base de l'ordre de 50 mm et une largeur de motif Wm de 230 mm, on calcule une densité d'incisions D de l'ordre de 122 $\mu$m/mm$^2$, un niveau d'orientation NO de 2,44 degrés/mm et un critère de tirage CT de 0,025.

On notera ici que la forme des éléments en relief 11a-11k et leur agencement sur la bande de roulement sont déterminés de sorte que la sculpture ainsi formée soit asymétrique. Le pneumatique a donc un sens de montage prédéterminé de sorte qu'un flanc du pneumatique se trouve toujours à l'extérieur du véhicule et ceci quelque soit sa position de montage (droite ou gauche) par rapport au véhicule. Ces pneumatiques sont en général pourvus d'un marquage (« outside » ou « inside ») indiquant à l'utilisateur quel flanc du pneumatique doit être tourné vers l'extérieur du véhicule, ci-après dénommé flanc externe, et quel flanc du véhicule doit être tourné vers l'intérieur du véhicule, ci-après dénommé flanc interne. En fonction du marquage du pneumatique, il est possible de déterminer sur la figure 4 une demi-bande de roulement interne 17 et une demi-bande de roulement externe 15. En effet, la demi-bande de roulement interne est la demi-bande de roulement adjacente au flanc interne et la demi-bande de roulement externe est la demi-bande de roulement adjacente au flanc externe. On notera qu'un plan médian 19 sépare la demi-bande de roulement interne 17 et la demi-bande de roulement externe 15.

Sur la figure 4, la demi-bande de roulement interne comprend le septième élément 11g, le huitième élément 11h, le neuvième élément 11i, le dixième élément 11j, le onzième élément 11 k. De la même manière, la demi-bande de roulement externe comprend le premier élément 11a, le second élément 11b, le troisième élément 11c, le quatrième élément 11d, le cinquième élément 11e et le sixième élément 11f.

On notera que la demi-bande de roulement interne a un rôle important dans le fonctionnement du pneumatique puisque c'est la partie de la bande de roulement qui est la plus sollicitée pour assurer l'adhérence sur un sol enneigé, et plus particulièrement lors de prises de virages. Ainsi, afin d'améliorer cette adhérence en virage, on donne aux incisions de la demi-bande de roulement interne une plus forte inclinaison par rapport à la direction transversale. On s'arrange notamment pour que le niveau d'orientation NO des incisions disposées sur les éléments en relief 11g-11k soit supérieur à 2 degrés/mm. Dans l'exemple du tableau décrit ci-dessus et en prenant une largeur de demi-bande de roulement interne égale à Wm/2, on détermine ainsi un niveau d'orientation de ces incisions de l'ordre de 3,43 degrés/mm.

L'invention n'est pas limitée aux exemples décrits et représentés, et diverses modifications peuvent y être apportées sans sortir de son cadre.

Par exemple, il est possible d'avoir des incisions d'orientation différente dans un même élément en relief du motif de base.

Dans une autre variante, le plan médian ne partage pas la bande de roulement en deux portions de même largeur axiale, le terme demi-bande ne désigne donc pas nécessairement la moitié de la bande de roulement.

**Revendications**

1. Bande de roulement asymétrique pour un pneumatique destiné à équiper un véhicule automobile,

   - ladite bande de roulement (1) comportant une surface de roulement destinée à être en contact avec un sol au cours du roulage du pneumatique ;
   - ladite bande de roulement (1) comportant une séquence de motifs de base (3, 5) agencés selon la direction circonférentielle (X), chaque motif de base s'étendant sur au moins 80% de la largeur (W) de la bande de roulement (1) ;
   - chaque motif de base (3, 5) comportant une pluralité d'éléments en relief (11a-11k) pourvus d'incisions (13i) débouchant sur la surface de roulement, chaque incision ayant une largeur inférieure à 1 mm et une profondeur d'au moins 3 mm ;
- ladite bande de roulement étant **caractérisée en ce que** :

pour chaque motif de base (3, 5), on définit ;

- une densité d'incisions (D) correspondant à $\dfrac{\sum\limits_{i} li}{P * Wm}$ avec i le nombre d'incisions dans le motif, li la longueur de la ième incision sur la surface de roulement, P le pas du motif de base et Wm la largeur du motif de base ;

- un niveau d'orientation des incisions (NO) correspondant à $\dfrac{\sum\limits_{i}|li * \alpha i|}{P * Wm}$ avec $\alpha$i l'angle positif ou négatif formé sur la surface de roulement par la ième incision avec la direction transversale et $|\alpha i| \leq 45$ degrés ;

- un critère de tirage du motif de base (CT) correspondant à $\left|\dfrac{\sum\limits_{i} li * \alpha i}{\sum\limits_{i}|li * \alpha i|}\right|$ ;

et **en ce que** la densité d'incision (D) est supérieure ou égale à 60 $\mu$m/mm², le niveau d'orientation des incisions (NO) est supérieur ou égal à 1,5 degrés/mm et le critère de tirage du motif (CT) est inférieur ou égal à 0,05 et **en ce que** ladite bande de roulement comprend une demi-bande de roulement interne (17) adjacente à un flanc interne du pneumatique, le niveau d'orientation des incisions (NO) appartenant à ladite demi-bande de roulement interne étant supérieur à 2 degrés/mm.

**Patentansprüche**

**1.** Asymmetrische Lauffläche für einen Luftreifen, der für die Ausrüstung eines Kraftfahrzeugs bestimmt ist,

- wobei die Lauffläche (1) eine Laufoberfläche aufweist, die dazu bestimmt sind, während des Rollens des Luftreifens mit einem Boden in Kontakt zu gelangen;
- wobei die Lauffläche (1) eine Folge von Grundmustern in (3, 5) aufweist, die in Umfangsrichtung (X) angeordnet sind, wobei sich jedes Grundmuster wenigstens über 80 % der Breite (W) der Lauffläche (1) erstreckt;
- wobei jedes Grundmuster (3, 5) mehrere Reliefelemente (11a-11k) aufweist, die mit Einschnitten (13i) versehen sind, die in die Laufoberfläche münden, wobei jeder Einschnitt eine Breite von weniger als 1 mm und eine Tiefe von mindestens 3 mm besitzt;
- wobei die Lauffläche **dadurch gekennzeichnet ist, dass**:

für jedes Grundmuster (3, 5) definiert ist:

- eine Einschnittdichte (D), die $\dfrac{\sum\limits_{i} li}{P \cdot Wm}$ entspricht, wobei i die Anzahl von Einschnitten in dem Muster ist, *li* die Länge des i-ten Einschnitts in der Laufoberfläche ist, P die Schrittweite des Grundmusters ist und *Wm* die Breite des Grundmusters ist;

- ein Orientierungsniveau (NO) der Einschnitte, das $\dfrac{\sum\limits_{i}|li \cdot \alpha i|}{P \cdot Wm}$ entspricht, wobei $\alpha$i der positive oder negative Winkel ist, der auf der Laufoberfläche durch den i-ten Einschnitt mit der transversalen Richtung gebildet wird, und $|\alpha i| \leq 45$ Grad ist;

- ein Druckkriterium des Grundmusters (CT), das $\left|\dfrac{\sum\limits_{i} li \cdot \alpha i}{\sum\limits_{i}|li \cdot \alpha i|}\right|$ entspricht;

und dass die Dichte (D) der Einschnitte größer oder gleich 60 $\mu$m/mm² ist, das Orientierungsniveau (NO) der Einschnitte größer oder gleich 1,5 Grad/mm ist und das Druckkriterium des Musters (CT) kleiner oder gleich 0,05 ist und dass die Lauffläche eine innere Halblauffläche (17) in der Nähe einer inneren Seitenfläche des Luftreifens aufweist, wobei das Orientierungsniveau (NO) der Einschnitte, die zu der inneren Halblauffläche gehören, größer als 2 Grad/mm ist.

**Claims**

1.  Asymmetric tread for a tyre intended to be fitted to a motor vehicle,

    - the said tread (1) comprising a tread surface intended to be in contact with a roadway when the tyre is being driven;
    - the said tread (1) comprising a sequence of basic patterns (3, 5) arranged in the circumferential direction (X), each basic pattern extending over at least 80% of the width (W) of the tread (1);
    - each basic pattern (3, 5) comprising a plurality of raised elements (11a-11k) provided with sipes (13i) opening onto the tread surface, each sipe having a width less than 1 mm and a depth of at least 3 mm;
    - said tread being **characterized in that**:

        the following are defined for each basic pattern (3, 5):

    - a sipes density (D) corresponding to $\dfrac{\sum_i li}{P * Wm}$ where i is the number of sipes in the pattern, li is the length of the $i^{th}$ sipe on the tread surface, P is the pitch of the basic pattern and Wm is the width of the basic pattern;

    - a sipes orientation level (NO) corresponding to $\dfrac{\sum_i |li * \alpha i|}{P * Wm}$, where $\alpha i$ is the positive or negative angle formed on the tread surface by the $i^{th}$ sipe with the transverse direction and $|\alpha i| \leq 45$ degrees;

    - a steering pull criterion for the basic pattern (CT) for the basic pattern corresponding to $\left| \dfrac{\sum_i li * \alpha i}{\sum_i |li * \alpha i|} \right|$ ;

    and **in that** the sipes density (D) is greater than or equal to 60 $\mu$m/mm$^2$, the sipes orientation level (NO) is greater than or equal to 1.5 degrees/mm and the steering pull criterion (CT) for the pattern is less than or equal to 0.05, and **in that** the said tread comprises an inboard half-tread (17) adjacent to an inboard sidewall of the tyre, the sipes orientation level (NO) relating to the said inboard half-tread being greater than 2 degrees/mm.

X
Y

1

7

5

3   P

9

5

3   P

Wm

W

**Fig.1**

1

7

8

W

**Fig.2**

**Fig.3**

**Fig.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1795372 A